# EUROPÄISCHE PATENTANMELDUNG

(11) **EP 1 645 361 A1**
(43) Veröffentlichungstag der Anmeldung: **12.04.2006**
(21) Anmeldenummer: 05022126.6
(22) Anmeldetag: 11.10.2005
(51) Int. Cl.: B23Q 11/00

(54) **Schneidvorrichtung zum Zerkleinern von Spänen**

(30) Priorität: 11.10.2004 DE 102004049640
(71) Anmelder: KNOLL MASCHINENBAU GMBH, 88348 Saulgau (DE)
(72) Erfinder: Binder, Bruno, 72175 Dornhan (DE)
(74) Vertreter: Eisele, Otten, Roth & Dobler

(57) **Zusammenfassung**

Es wird eine Schneidvorrichtung zum Zerkleinern von Spänen, mit einem insbesondere ein drehbares Schneidmesser (3) und ein fest angeordnetes Festmesser (5) umfassenden Schneidwerk (7) sowie mit einer Zufuhreinheit (16) zum gemeinsamen Zuführen der Späne und einer Flüssigkeit, insbesondere einer Kühlschmierflüssigkeit, zum Schneidwerk (7), vorgeschlagen, die den Stand der Technik verbessert. Dies wird erfindungsgemäß dadurch erreicht, dass das Schneidwerk (7) seitlich neben der Zufuhreinheit (16) angeordnet und ein Austrittselement (6) mit wenigstens einer Austrittsöffnung zum gemeinsamen Ausströmen von Spänen und von Kühlschmierflüssigkeit vorgesehen ist.

## Beschreibung

Die Erfindung betrifft eine Schneidvorrichtung zum Zerkleinern von Spänen nach dem Oberbegriff des Anspruchs 1.

### Stand der Technik

Beispielsweise ist aus der EP 0 518 095 B1 eine Transport-und Zerkleinerungsvorrichtung für Späne und Kühlmittel zur Entsorgung von flüssigen Medien mit Produktionsrückständen aus der Industrie, mit einem Auffangbehälter, der mit einer Transportpumpe versehen ist, und auf den eine Sieb- und' Austragseinrichtung zum Sieben des Mediums und zum Transportieren der gröberen Bestandteile in Richtung auf einen Austrag, aufgesetzt ist. Gemäß dieser Druckschrift wird beim vertikalen Transport zugleich die Flüssigkeit bzw. das Kühlschmiermittel von den Spänen getrennt.

Derartige Vorrichtungen sind im Allgemeinen Bearbeitungsmaschinen wie Werkzeugmaschinen zum Drehen, Fräsen und/oder Bohren nachgeschaltet, um die hierbei anfallenden Späne abzutransportieren. Die Zerkleinerung der Späne wird aus dem Grund vorgesehen, dass diese vergleichsweise einfach als Schüttgut z.B. automatisiert transportierbar sind.

Nachteilig bei entsprechenden Transport- und Zerkleinerungsvorrichtungen ist jedoch, dass die Späne dem Zerkleinerer von oben zugeführt werden, so dass eine vertikale Förderung dem Zerkleinerer vorgeschaltet werden muss, was einen relativ großen, konstruktiven Aufwand verursacht.

Bei entsprechenden Vorrichtungen ist zudem von besonderem Nachteil, dass diese vergleichsweise hoch und zudem relativ viel Fläche neben der Bearbeitungsmaschine in Anspruch nehmen. Entsprechende Flächen sind allerdings in Werkhallen besonders wertvoll. Beispielsweise sind Werkhallen mit mehreren Werkzeugmaschinen üblich, so dass die jeweils notwendigen Transport- und Zerkleinerungsvorrichtungen in der Summe große Flächen in entsprechenden Werkhallen benötigen. Somit "verbrauchen" diese Schneid- bzw. Transportvorrichtungen große Flächen, die für "produktive" Werkzeugmaschinen nicht mehr nutzbar sind.

Darüber hinaus sind bereits Transport- und Zerkleinerungsvorrichtungen handelsüblich, die in Vertiefungen im Hallenboden entsprechender Werkzeughallen eingelassen sind. Entsprechende Vertiefungen sollten bereits beim Bau der Werkzeughalle realisiert werden, so dass entsprechende Werkzeughallen unflexibel bzgl. sich verändernde Gegebenheiten sind, beispielsweise bei der Aufnahme neuer Werkzeugmaschinen.

### Aufgabe und Vorteile der Erfindung

Aufgabe der Erfindung ist es demgegenüber, eine Schneidvorrichtung zum Zerkleinern von Spänen mit einem insbesondere ein drehbares Schneidmesser und ein fest angeordnetes Festmesser umfassenden Schneidwerk sowie mit einer Zufuhreinheit zum gemeinsamen Zuführen der Späne und einer Flüssigkeit, insbesondere einer Kühlschmierflüssigkeit, zum Schneidwerk, vorzuschlagen, die den Stand der Technik verbessert.

Diese Aufgabe wird, ausgehend von einer Schneidvorrichtung der einleitend genannten Art, durch die kennzeichnenden Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Schneidvorrichtung dadurch aus, dass das Schneidwerk seitlich neben der Zufuhreinheit angeordnet und ein Austrittselement mit wenigstens einer Austrittsöffnung zum gemeinsamen Ausströmen von Spänen und von Kühlschmierflüssigkeit vorgesehen ist. Dies bedeutet unter anderem, dass gemäß der Erfindung keine Trennung der Späne von der KühlschmierLlüssigkeit vor oder innerhalb der Schneidvorrichtung realisiert ist. Vielmehr wird die Kühlschmierflüssigkeit als Transportfluid zur Verbesserung des Spenetransports nutzbar. Entsprechend reduziert sich der konstruktive Aufwand.

Die seitliche Zufuhr der Späne mit der Kühlschmierflüssigkeit zum Schneidwerk führt gerade in Kombination mit der zuvor genannten nicht vorhandenen Trennung der Späne von der Kühlschmierflüssigkeit dazu, dass eine besonders flache Bauweise bzw. Anordnung der Schneidvorrichtung für/an entsprechende Werkzeugmaschinen möglich ist. Gerade diese Kombination ermöglicht sogar, dass in bestimmten Anwendungsfällen eine Integration der erfindungsgemäßen Schneidvorrichtung in Werkzeugmaschinen der zuvor genannten Art realisierbar ist. Beispielsweise sind separate Schneid-und Transportvorrichtungen, die an entsprechende Werkzeugmaschen angebaut sind (vgl. z.B. die EP 0 518 059 B1) nicht notwendig. Gemäß der Erfindung wird dementsprechend deutlich weniger oder nahezu keine zusätzliche Fläche für die Schneidvorrichtung beansprucht.

Erfindungsgemäß kann eine weitestgehend durchgängige, im Wesentlichen horizontale Transportbewegung der Späne und der Kühlschmierflüssigkeit realisiert werden. Hiermit ist gewährleistet, dass vor allem im unteren Bereich entsprechender Werkzeugmaschinen die Schneidvorrichtung gemäß der Erfindung integriert bzw. angeordnet werden kann. Beispielsweise sind Werkzeugmaschinen mit Schneidvorrichtungen gemäß der Erfindung als eine Baueinheit realisiert. Vertiefungen im Hallenboden sind bei einer Schneidvorrichtung gemäß der Erfindung nicht notwendig.

Generell kann die Zufuhreinheit als Linear- und/oder Rotationsförderer ausgebildet werden. Beispielsweise ist die Zufuhreinheit als Kratzbandförderer oder dergleichen und/oder als horizontal rotierende Wendel und/oder als im Wesentlichen vertikal rotierende Scheibe oder dergleichen ausgebildet. Gemäß der Erfindung ist die Zufuhreinheit unmittelbar bzw. direkt neben dem Schneidwerk angeordnet.

Grundsätzlich können die Messer des Schneidwerks in unterschiedlichsten Varianten realisiert werden, wie diese z.B. bereits vielfach aus dem Stand der Technik bekannt sind. Vorzugsweise umfasst das Schneidwerk ein um eine im Wesentlichen horizontal ausgerichtete Drehachse rotierbares Schneidmesser und ein fest angeordnetes Festmesser. Es können jedoch auch mehrere zusammenwirkende bewegliche, insbesondere drehbare Schneidmesser und/oder mehrere Festmesser im Schneidwerk vorgesehen werden.

Vorzugsweise ist das Schneidmesser als Hebeelement zum wenigstens vertikalen Anheben der Späne ausgebildet. Mit dieser Maßnahme wird erreicht, dass die Späne innerhalb des Schneidwerks entgegen der Schwerkraft angehoben werden können, womit für nachfolgende Bearbeitungsschritte Höhe gewonnen wird.

In einer besonderen Weiterbildung der Erfindung ist das Festmesser im oberen Bereich des Schneidmessers angeordnet. Mit Hilfe dieser Maßnahme wird insbesondere das Ende des Anhebens der Späne mit Hilfe des Schneidmessers definierbar. Weiterhin ist durch die obere Anordnung des Festmessers von Vorteil, dass das Austrittselement vergleichsweise großflächig ausbildbar ist.

In einer besonderen Weiterbildung der Erfindung ist das Austrittselement wenigstens teilweise seitlich neben dem Schneidmesser und/oder wenigstens teilweise unterhalb des Schneidmessers angeordnet. Hierdurch wird mit Hilfe der Rotationsbewegung des Schneidmessers und/oder mit Hilfe der Schwerkraft ein nahezu selbsttätiges Austreten der Späne und der Kühlschmierflüssigkeit durch das Austrittselement realisierbar vorzugsweise überstreicht das Austrittselement wenigstens etwa ein Viertel des Kreisumfangs des Schneidwerks. Grundsätzlich ist von Vorteil, das Austrittselement derart auszubilden, dass dieses ein Kreissegmentabschnitt einer Zylindermantelfläche ausbildet.

Vorzugsweise ist das Austrittselement als Sieb mit zahlreichen Austrittsöffnungen ausgebildet. Hiermit wird der Durchtritt der Späne bzw. der Kühlschmierflüssigkeit vorteilhaft realisiert bzw. verbessert.

In vorteilhafter Weise ist das rotierende Schneidmesser derart ausgebildet, dass dies einen relativ großen Einzugskopf aufweist und die Späne entlang des Austrittselementes zum Festmesser transportiert. Durch diese Förderbewegung werden die bereits kurz gebrochenen Späne durch die vorteilhafte Austrittsöffnung geschoben, das Austrittselement bzw. das Sieb gereinigt und die Späne zum Schnitt am Festmesser geführt.

vorzugsweise ist dem Schneidwerk ein Förderer zum Transportieren der Späne und/oder der Flüssigkeit bzw. der Kühlschmierflüssigkeit nachgeschaltet. Generell kann der Förderer als mechanischer Förderer z,B. als Linearförderer wie ein Kratzbandförderer, ein Fließband und/oder mit einem um eine im wesentlichen in vertikaler oder horizontaler Richtung drehendes Förderelement ausgebildet werden.

Vorzugsweise ist wenigstens der Förderer zum wenigstens teilweise horizontalen Fördern der Späne unterhalb des Austrittselementes angeordnet. Hiermit wird gewährleistev, dass die aufgrund der Schwerkraft abwärts bewegenden Späne bzw. Kühlschmierflüssigkeit auf dem Weg durch das Austrittselement bzw. durch das Sieb ohne großen Aufwand zum Förderer gelangen und durch diesen weiter transportierbar sind. Hierdurch wird sowohl eine besonders einfache als auch flache Konstruktion realisierbar. Beispielsweise kann der Förderer in oder unter dem Bereich angeordnet werden, der durch die vertikale Anhebung mit Hilfe des Schneidmessers geschaffen wurde.

In einer besonderen Weiterbildung der Erfindung ist der Förderer als ein wenigstens eine Förderflüssigkeit aufweisender Hydraulik-Förderer zum gemeinsamen Fördern der Späne und der Förderflüssigkeit und/oder der Flüssigkeit bzw. der Kühlschmierflüssigkeit ausgebildet. Ein hydraulischer Förderer ist ganz besonders dazu in der Lage, die Flüssigkeit bzw. die Kühlschmierflüssigkeit mit den fließfähig gemachten Spänen in vorteilhafter Weise abzutransportieren.

Darüber hinaus kann ein hydraulisch arbeitender Förderer gemäß der Erfindung besonders kleinvolumig bzw. unter dem Sieb bzw. Schneidwerk oder dergleichen angeordnet werden, so dass eine sehr kompakte Schneidvorrichtung mit besonders geringer Bauhöhe realisierbar ist. Weiterhin ist ein pneumatischer Förderer denkbar, der z.B. als Fördergas Druckluft oder dergleichen umfasst.

Vorteilhafterweise ist das Förderfluid bzw. die Förderflüssigkeit als die Kühlschmierflüssigkeit ausgebildet. Hiermit wird einerseits eine Verschmutzung der Flüssigkeit bzw. der Kühlschmierflüssigkeit durch eine zweite Betriebsflüssigkeit wirkungsvoll verhindert, was eine aufwändige Aufbereitung bzw. Trennung z.B. für ein Wiederverwendung entbehrlich machen kann. Andererseits wird mit dieser Maßnahme das ganze Flüssigkeits-System bzw. - Management deutlich vereinfacht, was eine Reduktion des konstruktiven als auch des steuerungstechnischen Aufwandes bedeutet.

In einer vorteilhaften Variante der Erfindung umfasst der Hydraulik-Förderer wenigstens eine Abtransporteinheit bzw. Saugpumpe und eine Eintrittsöffnung, insbesondere einen Einrittspunkt eines Treibstrahls des Förderfluids, zum Einströmen des Förderfluids bzw. der Förderflüssigkeit sowie eine Saugöffnung zum gemeinsamen Abtransport bzw. Absaugen der Späne und des Förderfluids bzw. der Förderflüssigkeit und/oder der Flüssigkeit vorteilhafterweise wird das Förderfluid als Treibstrahl mittels einer Düse eingedüst. Hierbei wird eine kinetische Energie des Förderfluids zum Abtransport der Späne etc. verwendet. Es hat sich gezeigt, dass derartige Förderer besonders vorteilhaft realisiert werden können.

In einer besonderen Weiterbildung umfasst der Förderer wenigstens ein aufrecht stehendes Förderelement. Hiermit wird eine horizontale Weiterförderung der Späne in besonders einfacher Weise verwirklicht. Beispielsweise ist das aufrecht stehende Förderelement als Schieber auf einer feststehenden Unterlage und/oder als Erhebung eines sich bewegenden Elementes, insbesondere zur Ausbildung eines Behälters oder dergleichen, verwirklicht.

Vorteilhafterweise umfasst der Förderer eine um eine im Wesentlichen vertikale Drehachse drehbare Scheibe. Hiermit wird besonders einfach eine horizontale Transportrichtung der Späne verwirklichbar. Beispielsweise ist die Scheibe als planare Scheibe ohne oder mit aufrecht stehenden Förderelementen bzw. Erhebungen ausgebildet.

In einer vorteilhaften Ausführungsform der Erfindung ist das Förderelement in Bezug zur Drehachse im Wesentlichen radial und/oder geradlinig ausgebildet. Hiermit ist eine besonders einfache Weiterförderung und Konstruktion des Förderers realisierbar.

Vorteilhafterweise ist die Länge des Förderelementes in radialer Richtung kleiner oder gleich einem Durchmesser eines Abströmelementes zum Weiterfördern der Späne. Beispielsweise ist der Transportbereich des Förderers ringförmig ausgebildet. Das bedeutet unter anderem, dass beispielsweise im zentralen Bereich des rotierenden Förderers kein Fördern bzw. keine Aufnahme der Späne vorgesehen ist, sondern lediglich im Umfangsbereich des rotierenden Förderers.

Generell ist bei einem um eine vertikale Achse rotierenden Förderer von Vorteil, den Förderbereich durch ein aufrecht stehendes, kreisförmiges Führungs- bzw. Förderelement im äußeren und/oder im inneren Bereich vorzusehen. Beispielsweise kann ein entsprechendes kreisförmiges Führungs- bzw. Förderelement auf der Scheibe und/oder fest fixiert am Boden der Schneidvorrichtung oder vergleichbar ausgebildet werden.

Vorzugsweise ist das Abströrnelement oberhalb des Förderers angeordnet und es ist insbesondere Teil einer Pumpeinheit, die die Späne, gegebenenfalls zusammen mit Kühlschmierflüssigkeit, durch eine Absaugöffnung absaugt. Hiermit können die Späne und gegebenenfalls die gesamte Kühlschmierflüssigkeit oder ein Teil von dieser beispielsweise an eine zentrale Sammel- und/oder Aufbereitungseinheit in vorteilhafter Weise weitertransportiert werden.

In einer besonderen Weiterbildung der Erfindung ist zwischen der Zufuhreinheit und dem Förderer, insbesondere dem Tellerförderer oder dem Hydraulik-Förderer, wenigstens eine Ausgleichsleitung und/oder ein Bypass und/oder eine Rückführleitung zum Überlauf bzw. Ausgleichen bzw. Rückführen der Flüssigkeit insbesondere entlang oder entgegen der Förderrichtung der Späne angeordnet.

Vorzugsweise ist die Zufuhreinheit als Flüssigkeitsspeicher zum Speichern der Flüssigkeit ausgebildet. Beispielsweise ist ein Zufuhrelement der Zufuhreinheit wenigstens als Hohlwendel, insbesondere als um eine horizontale Drehachse drehende Hohlwendel, ausgebildet. Gerade eine Hohlwendel bzw. eine kernlose Transportwendel, benötigt selbst vergleichsweise wenig Volumen, so dass die Zufuhreinheit entsprechend viel Kühlschmierflü'ssigkeit speichern kann.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: eine schematische Seitenansicht einer erfindungsgemäßen Schneidvorrichtung,
- Figur 2: eine schematische Draufsicht auf die erfindungsgemäße Schneidvorrichtung gemäß Figur 1,
- Figur 3: eine schematische Draufsicht einer zweiten, erfindungsgemäßen Schneidvorrichtung und
- Figur 4: eine schematische Seitenansicht im Schnitt auf die zweite, erfindungsgemäße Schneidvorrichtung gemäß Figur 3.

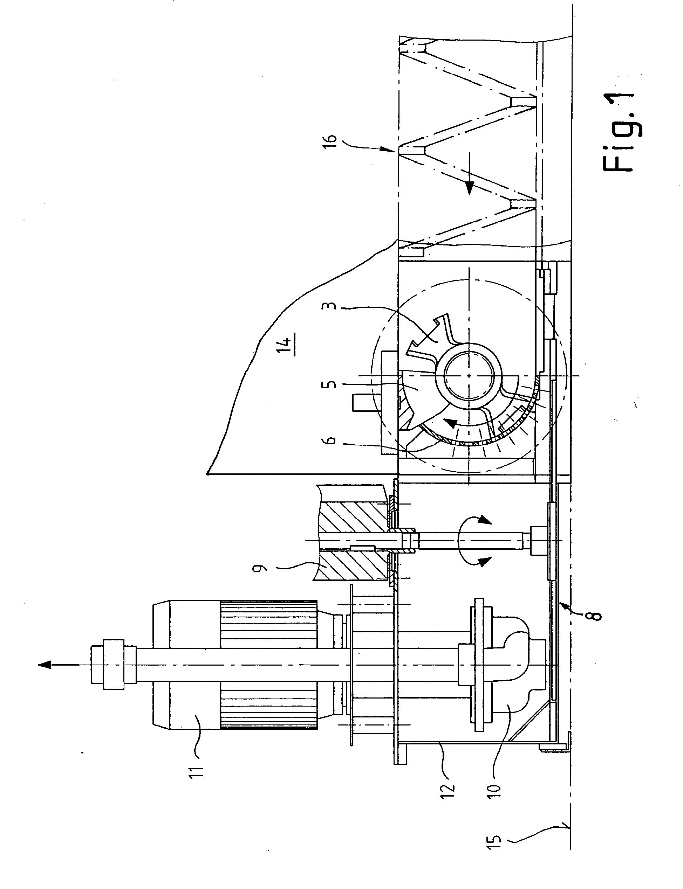

In Figur 1 ist eine Schneidvorrichtung gemäß der Erfindung im Ausschnitt schematisch dargestellt. Diese ist in einer Werkzeugmaschine 14 im Wesentlichen integriert. Die Werkzeugmaschine 14 steht auf einem Hallenboden 15 in einer nicht näher dargestellten Werkzeughalle, die beispielsweise zahlreiche Werkzeugmaschinen 14 aufweist- Heutzutage ist man z.T. bereits dazu übergangen entsprechende Produktionsrückstände wie Späne oder dergleichen einem zentralen, nicht näher dargestellten Sammel- und Aufbereitungszentrum zuzuführen.

Gemäß der Erfindung wird einem Schneidwerk 7 mit Hilfe einer Hohlwendel 16 nicht näher dargestellte Späne der Werkzeugmaschine 14 und Kühlschmierflüssigkeit zugeführt. Die Späne können in kurzer oder wolliger Form vorliegen und werden in der Schneidvorrichtung gemäß der Erfindung, falls noch nicht entsprechend vorliegend, in Schüttgut umgewandelt. In dieser Form können die Späne in vorteilhafter Weise zusammen mit dem Fluid, insbesondere der Kühlschmierflüssigkeit, durch Rohrleitungen beispielsweise zur zentralen Sammel- oder Aufbereitungseinheit zugeführt werden.

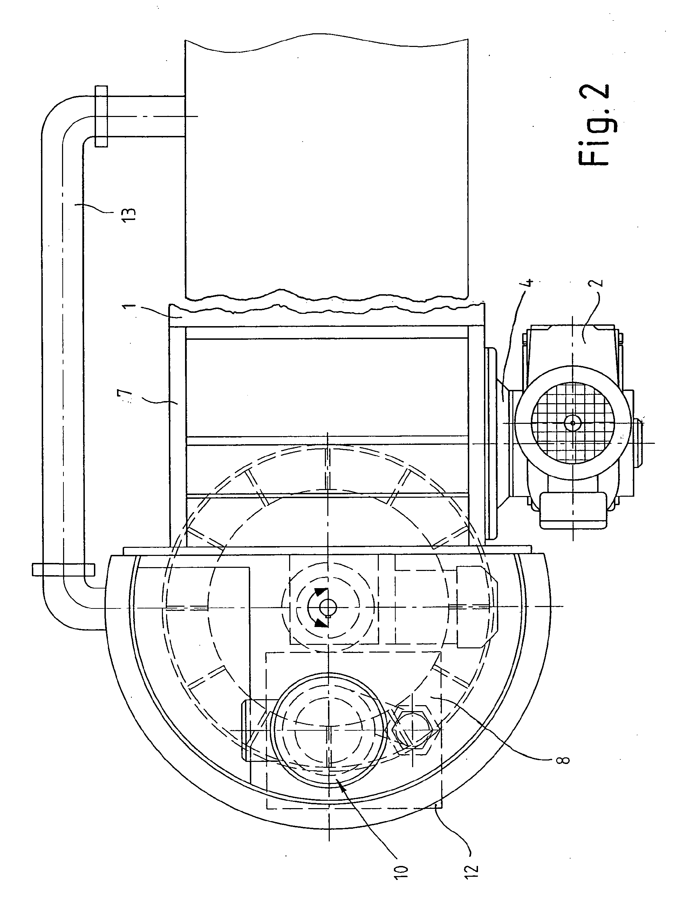

Das Schneidwerk 7 umfasst ein rotierendes Messer 3 sowie ein unbewegliches Festmesser 5 und wird in vorteilhafter Weise durch einen Elektromotor 2 gemäß Figur 2 angetrieben. Eine Welle des Schneidwerks 7 wird mit Hilfe eines Lagers 4 gelagert.

Darüber hinaus umfasst das Schneiwerk 7 ein Sieb 6, dass zahlreiche Öffnungen aufweist und sich beispielsweise etwa vom tiefsten Punkt der Mantelfläche bis zum Festmesser 5 erstreckt. Hierdurch wird eine besonders großflächige Durchtrittsmöglichkeit für Späne und Kühlschmiermittel realisierbar- Das Festmesser 5 ist im oberen Bereich des Schneidwerks 7 angeordnet. Das rotierende Messer 3 transportiert die Späne längs des Siebes 6 zum Festmesser 5, wobei bereits entsprechend kurze Späne durch die Öffnungen des Siebes 6 hindurchtreten und vergleichsweise lange Späne am Festmesser 5 entsprechend abgetrennt werden, so dass auch diese insbesondere bei der nächsten Umdrehung durch das Sieb 6 hindurchtreten können.

Beim Durchtritt der Späne und der Kühlschmierflüssigkeit durch das Sieb 6 "fallen" diese aufgrund der Schwerkraft nach unten auf ein Teller 8. Das als flache Scheibe mit Transportsegmenten ausgebildete Teller 8 wird mittels einem vorteilhaften Elektromotor 9 bzw. Antrieb 9 angetrieben. Die Drehrichtung des Tellers 8 ist von untergeordneter Bedeutung.

Wesentlich hierbei ist, dass das Teller B die Späne zu einem Absaugpunkt bzw. einer Absaugung 10 transportiert. Die Absaugung 10 saugt die auf dem Teller 8 befindlichen Späne mit Hilfe eines Pumpmotors 11 oder eines Absaugers ab und in nicht näher dargestellter Weise beispielsweise zu einer zentralen Sammel- bzw. Aufbereitungseinheit.

In Figur 2 ist ein Ausgleich bzw. Rücklauf 13 dargestellt, der ermöglicht, dass Kühlschmierflüssigkeit eines Speichers 12, in dem sich das Teller 8 befindet, direkt zurück in die Werkzeugmaschine 14 bzw. in den Bereich der Hohlwelle 16 fließen kann. Hierdurch wird ein Ausgleich ermöglicht.

Vor allem in Figur 1 wird deutlich, dass mit Hilfe einer Schneidvorrichtung gemäß der Erfindung eine besonders flache Bauweise realisierbar ist. Derzeit weisen im Allgemeinen Werkzeugmaschinen 14 ein Austrittsniveau eine lichte Höhe zum Hallenboden 15 von circa 220 bis 400 mm auf. Die Schneidvorrichtung gemäß der Erfindung ist derart flach ausgebildet, dass ihr diese lichte Höhe ausreicht, um die Späne, soweit notwendig, zu verkleinern und in Schüttgut umzuwandeln und insbesondere in Kombination mit dem Teller 8 zur Absaugung 10 weiter zu transportieren, von der aus die Späne mit einem Teil der Kühlschmierflüssigkeit zu einer zentralen Sammel- bzw. Aufbereitungsstation oder dergleichen gefördert werden können.

Derzeitige Werkzeugmaschinen 14 weisen im Allgemeinen unter der Werkzeugbearbeitung eine Wanne bzw. einen Speicher auf, in dem die anfallenden Späne und Kühlschmiermittel gespeichert werden. Von hier aus werden die Bearbeitungsrückstände aufgenommen und über einen Transportmechanismus wie z.B. die Hohlwendel 16, eine Schnecke, ein Schubstangenförderer etc. direkt in das Schneidwerk 7 transportiert. Wesentlich hierbei ist, dass das Schneidwerk 7 seitlich neben der Zufuhreinheit bzw. der Hohlwendel 16 angeordnet ist.

In Figur 1 wird darüber hinaus deutlich, dass der Speicher 12 im Wesentlichen ebenerdig auf dem Hallenboden 15 angeordnet ist. Hierdurch ist ein geringer Höhenunterschied zwischen dem zuführenden Schneidwerk 7 und dem Speicher 12 umgesetzt. Dieser geringe Höhenunterschied reicht aus, um die durch das rotierende Messer 3 etwas vertikal nach oben transportierte Späne und durch das Sieb 6 fallende Späne auf dem Teller 8 aufzunehmen und weiterzutransportieren.

Zur Lösung der erfindungsgemäßen Aufgabe ist grundsätzlich von Vorteil, zwischen dem Schneidwerk 7 und der Absaugung 10 einen Förderer vorzusehen, der ein Förderelement aufweist, das um eine im Wesentlichen vertikale Drehachse drehbar ist. Neben der dargestellten Ausführungsvariante ist auch eine Ausführungsvariante denkbar, bei der beispielsweise ein um die Drehachse rotierender Schieber auf dem Boden des Speichers 12 die Späne vom Schneidwerk 7 zur Absaugung 10 fördert. Entsprechende Förderer können besonders flach ausgebildet werden, was eine flache Bauweise der Schneidvorrichtung gemäß der Erfindung begünstigt.

Generell ist von Vorteil, dass wegen des vergleichsweise geringen Volumens des Speichers 12 der Überlaufkanal 13 vorgesehen ist, über den die Flüssigkeit vom Speicher 12 bei einem hohen Füllstand in die Werkzeugmaschine 14 bzw. deren Wanne zurückgeführt werden kann. Die für einen besonders stabilen Spänetransport erforderliche Flüssigkeitsmenge wird in der Wanne im unteren Bereich der Werkzeugmaschine 14 gespeichert, so dass der teilweise außerhalb der Maschine 14 befindliche Schneidwerksbereich mit benachbartem Behältnis bzw. Speicher 12 lediglich sehr wenig Aufstellfläche benötigt.

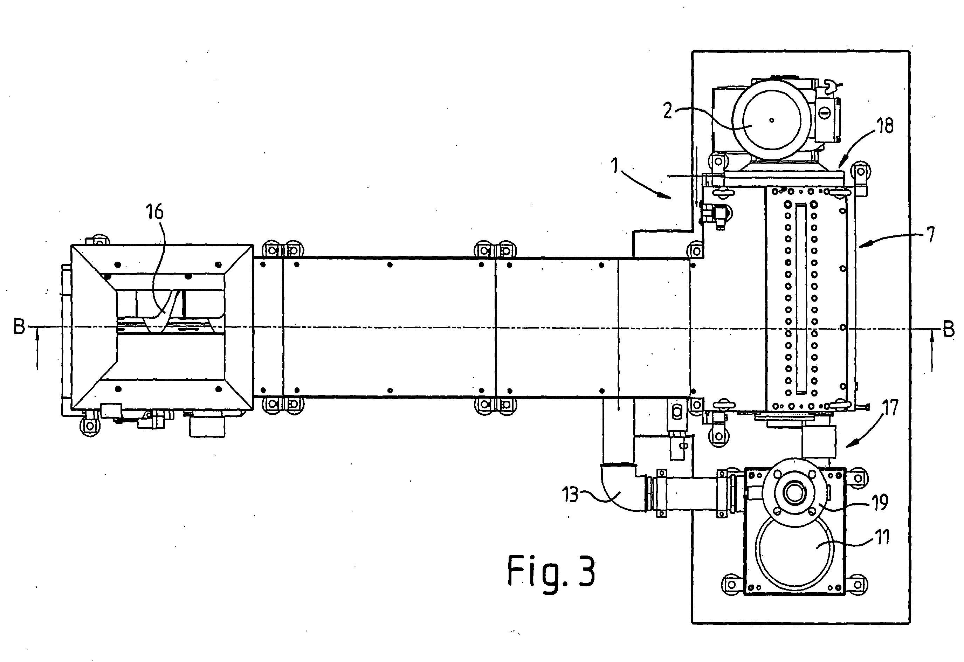

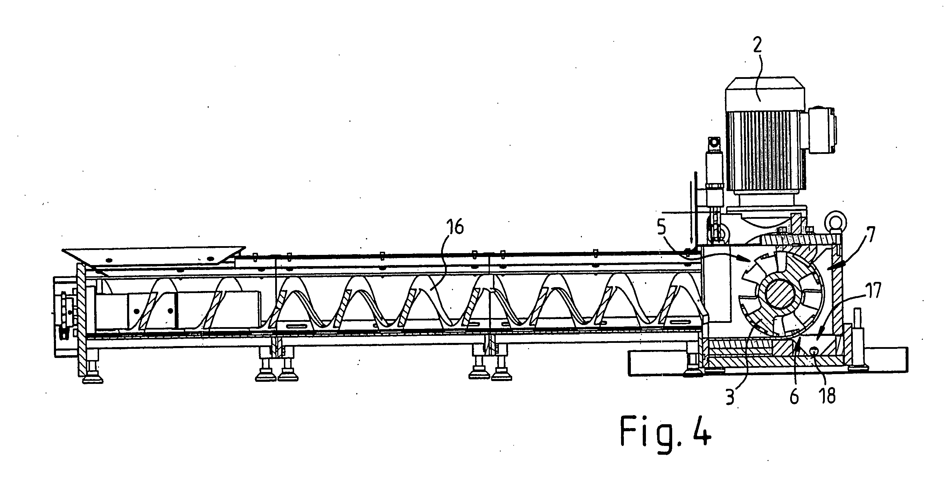

Darüber hinaus kann gemäß der Erfindung alternativ auch ein Förderer als hydraulischer Förderer bzw. Hydraulik-Förderer 17 realisiert werden, wie z.B. in den Figuren 3 und 4 dargestellt. Hierbei stellt Figur 4 einen Schnitt durch die Schneidvorrichtung gemäß Figur 1 längs einer Linie B-B dar.

Als besonders wesentlicher Unterschied zur Schneidvorrichtung gemäß den Figuren 1 und 2 weist die Variante der Erfindung gemäß den Figuren 3 und 4 nach dem Schneidwerk 7 keinen "Scheibenförderer" bzw. mechanischen Teller/Förderer 8 zum Weitertransport der Späne und ggf. der Kühlschmierflüssigkeit auf, sondern den Hydraulik-Förderer 17.

Der Hydraulik-Förderer 17 umfasst in vorteilhafter Weise die Absaugung 10, der sowohl Fluid bzw. Flüssigkeit, insbesondere Kühlschmierflüssigkeit und die Späne ansaugt und z.B. der zentralen Späneaufbereitung in nicht näher dargestellter Weise mit Hilfe eines Druckstutzens 19 oder Unterdruckrohres zuführt. Die Saugpumpe kann z.B. als Kreiselpumpe ausgebildet werden, die vorzugsweise spantauglich und luftverträglich ist.

Weiterhin umfasst der Hydraulik-Förderer 17 eine Eintrittsöffnung 18 zum Einströmen des Fluids bzw. der Flüssigkeit zum Bereich unter dem Schneidwerk 17. Vorzugsweise wird das Förderfluid bzw. die Förderflüssigkeit unter Druck durch die Eintrittsöffnung 18 eingeströmt bzw. eingedrückt. Mittels der kinetischen Energie der strömenden bzw. angesaugten Flüssigkeit werden sowohl Späne als auch durch das Sieb 6 gesaugte Flüssigkeit abtransportiert.

Die Variante der Figuren 3 und 4 ist besonders kompakt ausgebildet bzw. weist eine besonders geringe Höhe auf.

Bezugszeichenliste
- 1: Gehäuse
- 2: Antrieb
- 3: Messer
- 4: Lager
- 5: Festmesser
- 6: Sieb
- 7: Schneidwerk.
- 8: Teller
- 9: Antrieb
- 10: Absaugung
- 11: Pumpmotor
- 12: Speicher
- 13: Überlauf
- 14: werkzeugmaschine
- 15: Hallenboden
- 16: Hohlwendel
- 17: Hydraulik-Förderer
- 18: Eintrittsöffnung
- 19: Druckstutzen oder Sauganschluss

## Patentansprüche

1. Schneidvorrichtung zum Zerkleinern von Spänen, mit einem insbesondere ein drehbares Schneidmesser (3) und ein fest angeordnetes Festmesser (5) umfassenden Schneidwerk (7) sowie mit einer Zufuhreinheit (16) zum gemeinsamen Zuführen der Späne und einem Fluid, insbesondere einer Kühlschmierflüssigkeit, zum Schneidwerk (7), **dadurch gekennzeichnet, dass** das Schneidwerk (7) seitlich neben der Zufuhreinheit (16) angeordnet und ein Austrittselement (6) mit wenigstens einer Austrittsöffnung zum gemeinsamen Ausströmen von Spänen und von Flüssigkeit vorgesehen ist.

2. Vorrichtung nach Anspruch 1, **dadurch gekennzeichnet, dass** das Schneidmesser (3) als Hebeelement (3) zum wenigstens vertikalen Anheben der Späne ausgebildet ist.

3. Vorrichtung nach einem der vorgenannten Ansprüche, **dadurch gekennzeichnet, dass** das Festmesser (5) im oberen Bereich des Schneidmessers (3) angeordnet ist.

4. Vorrichtung nach einem der vorgenannten Ansprüche, **dadurch gekennzeichnet, dass** das Austrittselement (6) wenigstens teilweise seitlich neben dem Schneidmesser (3) angeordnet ist.

5. Vorrichtung nach einem der vorgenannten Ansprüche, **dadurch gekennzeichnet, dass** das Austrittselement (6) wenigstens teilweise unterhalb des Schneidmessers (3) angeordnet ist.

6. Vorrichtung nach einem der vorgenannten Ansprüche, **dadurch gekennzeichnet, dass** wenigstens ein Förderer (8, 17) zum wenigstens teilweise horizontalen Fördern der Späne unterhalb des Austrittselementes (6) angeordnet ist.

7. Vorrichtung nach einem der vorgenannten Ansprüche, **dadurch gekennzeichnet, dass** der Förderer (8) als ein wenigstens ein Förderfluid aufweisender Pneumatik- und/oder Hydraulik-Förderer (17) zum gemeinsamen Ferdern der Späne und des Förderfluids ausgebildet ist.

8. Vorrichtung nach einem der vorgenannten Ansprüche, **dadurch gekennzeichnet, dass** das Förderfluid als die Kühlschmierflüssigkeit ausgebildet ist.

9. Vorrichtung nach einem der vorgenannten Ansprüche, **dadurch gekennzeichnet, dass** der Hydraulik-Förderer (17) wenigstens eine Saugpumpe (11) und eine Eintrittsöffnung (18) zum Einströmen des Förderfluids sowie eine Saugöffnung (19) zum gemeinsamen Absaugen der Späne und des Förderfluids und/oder der Flüssigkeit umfasst.

10. Vorrichtung nach einem der vorgenannten Ansprüche, **dadurch gekennzeichnet, dass** der Förderer (8) wenigstens ein aufrecht stehendes Förderelement aufweist.

11. Vorrichtung nach einem der vorgenannten Ansprüche, **dadurch gekennzeichnet, dass** das Förderelement um eine im Wesentlichen vertikale Drehachse drehbar ist.

12. Vorrichtung nach einem der vorgenannten Ansprüche, **dadurch gekennzeichnet, dass** der Förderer (8) eine um eine im Wesentlichen vertikale Drehachse drehbare Scheibe umfasst.

13. Vorrichtung nach einem der vorgenannten Ansprüche, **dadurch gekennzeichnet, dass** das Förderelement in Bezug zur Drehachse im Wesentlichen radial ausgerichtet ist.

14. Vorrichtung nach einem der vorgenannten Ansprüche, **dadurch gekennzeichnet, dass** das Förderelement im Wesentlichen geradlinig ausgebildet ist.

15. Vorrichtung nach einem der vorgenannten Ansprüche, **dadurch gekennzeichnet, dass** die Länge des Förderelementes in radialer Richtung kleiner oder gleich einem Durchmesser eines Abströmelementes (10) zum Weiterfördern der Späne ist.

16. Vorrichtung nach einem der vorgenannten Ansprüche, **dadurch gekennzeichnet, dass** das Abströmelement (10) oberhalb des Förderers (8) angeordnet ist.

17. Vorrichtung nach einem der vorgenannten Ansprüche, **dadurch gekennzeichnet, dass** das Abströmelement (10) wenigstens eine Absaugöffnung (10) einer Pumpeinheit (11) aufweist.

18. Vorrichtung nach einem der vorgenannten Ansprüche, **dadurch gekennzeichnet, dass** zwischen der Zufuhreinheit (16) und dem Förderer (8) wenigstens eine Rückführleitung (13) zum Rückführen des Fluids entgegen der Förderrichtung der Späne angeordnet ist.

19. Vorrichtung nach einem der vorgenannten Ansprüche, **dadurch gekennzeichnet, dass** die Zufuhreinheit (16) als Flüssigkeitsspeicher zum Speichern des Fluids ausgebildet ist.

20. Vorrichtung nach einem der vorgenannten Ansprüche, **dadurch gekennzeichnet, dass** ein Zufuhrelement der Zufuhreinheit (16) wenigstens als Hohlwendel (16) ausgebildet ist.

21. Werkzeugmaschine (14) mit einer Bearbeitungseinheit zum spannenden Bearbeiten eines Werkstücks und mit einer Schneidvorrichtung nach einem der vorgenannten Ansprüche.
